# EUROPEAN PATENT APPLICATION

(11) **EP 2 779 477 A1**
(43) Date of publication of application: **17.09.2014**
(21) Application number: 12847933.4
(22) Date of filing: 18.09.2012
(51) Int. Cl.: H04B 5/00

(54) **METHOD, DEVICE AND SYSTEM FOR ESTABLISHING CONVERSATION RELATION**

(30) Priority: 10.11.2011 CN 201110354622
(71) Applicant: Tencent Technology (Shenzhen) Co., Ltd, Shenzhen, Guangdong 518044 (CN)
(72) Inventor: LEI, Yu, Guangdong 518044 (CN); HE, Jing, Guangdong 518044 (CN); FANG, Kui, Guangdong 518044 (CN); ZOU, Hualin, Guangdong 518044 (CN); CHEN, Bin, Guangdong 518044 (CN); YE, Liwei, Guangdong 518044 (CN); LI, Bo, Guangdong 518044 (CN); FU, Youdong, Guangdong 518044 (CN); WANG, Qinglian, Guangdong 518044 (CN)
(74) Representative: Prinz & Partner
(86) International application number: PCT/CN2012/081532
(87) International publication number: WO 2013/067853

(57) **Abstract**

Disclosed are a method, device and system for establishing conversation relation, which relates to the field of internet and. The method comprises the following steps: local terminal recognizes the opposite terminal within a preset range and establishes NFC connection with the opposite terminal, both of local terminal and opposite terminal have NFC module installed and instant messaging application running; when touching is detected, local terminal initiates a NFC request to opposite terminal via NFC connection, obtain opposite terminal user ID and certificate, and sends request information to the server; the server establishes conversation relation between local terminal and opposite terminal according to request information. With the present invention, local terminal obtains opposite terminal user ID and certificate by touching, and sends request information which includes local terminal user ID, opposite terminal user ID and certificate to the server, so that the server can establish sessions between local terminal and local terminal without certification of both sides, it avoids the trouble of locating, verifying, establishing friendship via network before session between friends within touch effectively

## Description

This application is a continuation of International Application No. PCT/CN2012/081532, filed on Nov. 10, 2011, which claims the priority of Chinese Application No. 201110354622.0, entitled "Method, Device and System for Establishing Session Relation" and filed on November 10, 2011, the content of which are incorporated herein by reference in their entirety.

### FIELD OF THE INVENTION

The present invention is related to the field of Internet technologies, in particular to a method, device and system for establishing a session relationship.

### BACKGROUND

With the development of the 3G wireless Internet, people have an increasingly mature sense of wireless applications, while user terminal manufacturers provide more and more supports for wireless technologies. In the current epoch of transition from non-intelligent devices to intelligent devices, a Near Field Communication (NFC) technology has been provided. In the NFC technology that is evolved from the integration of a touchless Radio Frequency Identification (RFID) technology with an interconnection and intercommunication technology, functions of an inductive card reader, a inductive card and a point to point mechanism are combined on a single chip, which hence is able to identify a compatible device within a short range and exchange data with the device.

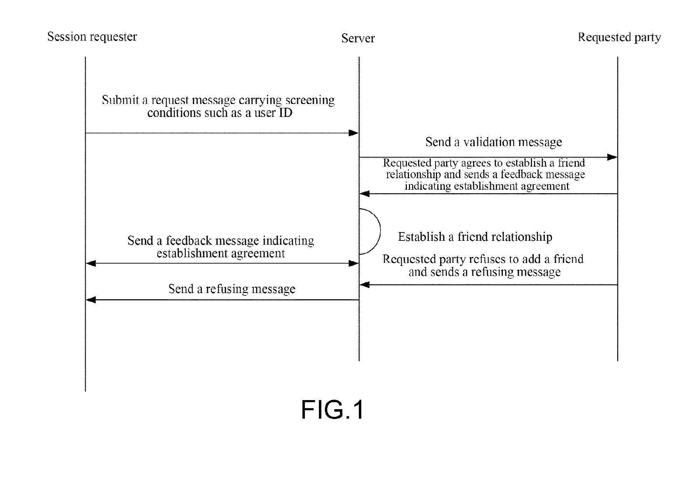

In an existing technology for establishing a session relationship as shown in Figure 1, an Instant Messenger (IM) software on either a PC or a wireless user terminal is generally used by a session requester to send a request message to a server through a network, here, the request message carries unique or non-unique identification information such as a user ID or user information. The server sends a validation message to a requested party according to the request message, and a session can be established only if a friend relationship is established according to a feedback message from the requested party. If agreeing to establish the friend relationship, the requested party sends a feedback message indicating the agreement on the friend relationship establishment to the server, which in turn establishes a friend relationship between the session requester and the requested party and feeds the feedback message back to the session requester, to start the session. If the requested party refuses to establish the friend relationship, then the session relationship cannot be established.

To establish a session relationship in the prior art, the session requester is required to initiate a request message to the requested party through a network and establish a friend relationship according to the feedback message from the requested party, and then the session can be carried out according to the friend relationship, thus the cost for establishing the session is relatively high.

### SUMMARY OF THE INVENTION

In order to reduce the cost for establishing a session relationship, a method, device, and system for establishing a session relationship are provided by embodiments of the invention.

A method for establishing a session relationship includes: identifying, by a local terminal, an opposite terminal within a preset range, and establishing an NFC connection with the opposite terminal, wherein both the local terminal and the opposite terminal are equipped with an NFC module for establishing the NFC connection and are running an Instant Messenger software; and initiating, by the local terminal, an NFC request to the opposite terminal according to the NFC connection when the local terminal detects a touch action, acquiring an opposite terminal user ID and an opposite terminal certificate, and sending to a server a request message that carries a local terminal user ID, the opposite terminal user ID and the opposite terminal certificate, to enable the server to establish the session relationship between the local terminal and the opposite terminal according to the request message.

A device for establishing a session relationship includes: an identification module for identifying an opposite terminal within a preset range and establishing an NFC connection with the opposite terminal, wherein both the local terminal and the opposite terminal are equipped with an NFC module for establishing the NFC connection and are running an Instant Messenger software; a first acquiring module for initiating an NFC request to the opposite terminal according to the NFC connection, to acquire an opposite terminal user ID and an opposite terminal certificate, when a touch action is detected; and a session establishing module for sending to a server a request message that carries a local terminal user ID, the opposite terminal user ID and the opposite terminal certificate, to enable the server to establish the session relationship between the device and the opposite terminal according to the request message.

A system for establishing a session relationship includes a local terminal equipped with an NFC module and running an Instant Messenger software, an opposite terminal equipped with an NFC module and running an Instant Messenger software, and a server; where, the local terminal is configured to identify an opposite terminal within a preset range and establish an NFC connection with the opposite terminal; initiate an NFC request to the opposite terminal according to the NFC connection when detecting a touch action, to acquire an opposite terminal user ID and an opposite terminal certificate; and send to the server a request message that carries a local terminal user ID, the opposite terminal user ID and the opposite terminal certificate; the opposite terminal is configured to sends the opposite terminal user ID and the opposite terminal certificate to the local terminal; the server is configured to receive the request message sent by the local terminal and establish the session relationship between the local terminal and the opposite terminal according to the request message.

In the method, device and system for establishing a session relationship mentioned above, the local terminal identifies the opposite terminal by the in-built NFC module, and acquires the opposite terminal user ID and the opposite terminal certificate when detecting a touch action, so as to send the request message that carries the local terminal user ID, the opposite terminal user ID and the opposite terminal certificate to the server, to enable the server to establish the session relationship between the local terminal and the opposite terminal without an authentication by the local and opposite terminals, thus effectively avoiding the friend relationship establishment between friends adjacent to each other through searching, positioning and validating over the network for the purpose of conducting the session. Furthermore, it is convenient for a terminal user to add a neighboring stranger as a frequently contacted IM friend, and the whole process for establishing a friend relationship is short and convenient, without the complicated process requiring a terminal user validation in the prior art. Therefore, the costs for users to add friends are reduced, while a good experience of communicating and sharing is obtained, to improve user stickiness. Since a convenient friend-adding experience is provided for users, the reputation and value of an Instant Messenger software product is promoted.

### BRIEF DESCRIPTION OF THE DRAWINGS

Accompanying drawings used for the description of embodiments of the invention are briefly introduced below, to illustrate the solutions in the embodiments more clearly. Apparently, the drawings in the following description are used for describing some embodiments of the invention, and further drawings can be obtained according to the described drawings without any creative work by those skilled in the art.
Fig. 1 is a schematic drawing of a session relationship establishment in the prior art;
Fig. 2 is flowchart of a method for establishing a session relationship according to a first embodiment of the invention;
Fig. 3 is flowchart of a method for establishing a session relationship according to a second embodiment of the invention;
Fig. 4 is a schematic structural diagram showing a device for establishing a session relationship according to a third embodiment of the invention; and
Fig. 5 is a schematic structural diagram showing a system for establishing a session relationship according to a fourth embodiment of the invention.

### DETAILED DESCRIPTION

Embodiments of the invention are further described in detail below in conjunction with the accompanying drawings for better understanding of solutions and advantages of the invention.

### A First Embodiment

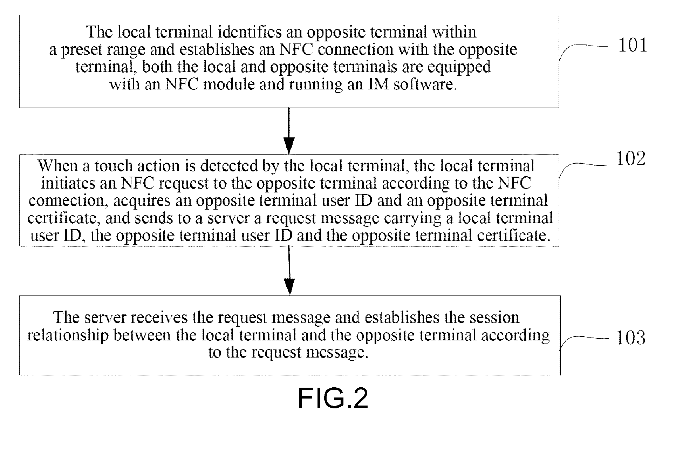

With reference to Figure 2, a method for establishing a session relationship is provided in the first embodiment of the invention, and the method includes the following steps 101-103.

At Step 101, a local terminal identifies an opposite terminal within a preset range and establishes a Near Field Communication (NFC) connection with the opposite terminal. The local and opposite terminals may be any electronic terminals, such as a smart phone and a tablet computer, which are equipped with an accelerator or other vibration sensors, are equipped with an NFC module for establishing the NFC connection and are running an Instant Messenger software.

At Step 102, when a touch action is detected by the local terminal, the local terminal initiates an NFC request to the opposite terminal through the NFC connection to acquire an the opposite terminal user ID and an opposite terminal certificate, and sends to a server a request message that carries a local terminal user ID, the opposite terminal user ID and the opposite terminal certificate. The request message may be sent through the above Instant Messenger software, for example.

At Step 103, the server receives the request message and establishes the session relationship between the local terminal and the opposite terminal according to the request message.

According to the method in the embodiment of the invention, the local terminal identifies the opposite terminal by the in-built NFC module, and acquires the opposite terminal user ID and the opposite terminal certificate when touching the opposite terminal, so as to send the request message that carries the local terminal user ID, the opposite terminal user ID and the opposite terminal certificate to the server, to enable the server to establish the session relationship between the local terminal and the opposite terminal without an authentication by the local and opposite terminals, thus effectively avoiding the friend relationship establishment between friends adjacent to each other through searching, positioning and validating over the network for the purpose of conducting the session.

### A Second Embodiment

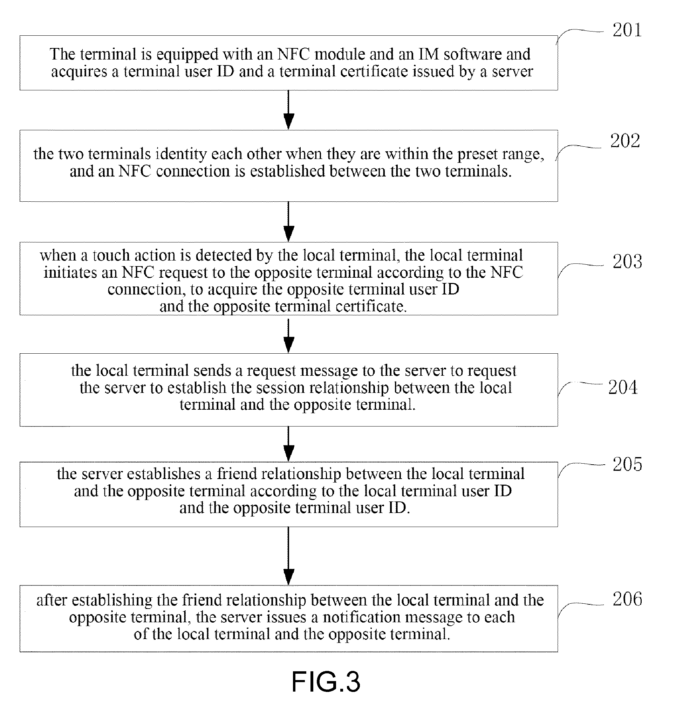

With reference to Figure 3, a method for establishing a session relationship is provided in the second embodiment of the invention, and the method includes the following steps 201-206.

At Step 201, a terminal is equipped with an NFC module and an IM software and acquires a terminal user ID and a terminal certificate issued by a server.

In particular, this embodiment of the invention is exemplified by taking a requester requesting for establishing a session as a local terminal and taking the other terminal of the session as an opposite terminal. There may be one local terminal and a plurality of opposite terminals in this embodiment of the invention, and both the opposite terminals and the local terminal are equipped with an NFC module and an IM software.

After an IM software is started by the local terminal, the local terminal acquires a local terminal user ID. Similarly, After an IM software is started by the opposite terminal, the opposite terminal acquires an opposite terminal user ID. After the NFC module is enabled by the local terminal, the local terminal initiates a request to the server to acquire a local terminal certificate returned by the server. Similarly, after the NFC module is enabled by the opposite terminal, the opposite terminal initiates a request to the server to acquire an opposite terminal certificate returned by the server. Each of the local terminal certificate and the opposite terminal certificate may be a sequence of random numbers, or any other code recognizable for the opposite terminal and the server.

The local terminal user ID and the opposite terminal user ID uniquely identify the local terminal user and the opposite terminal user, respectively. The local terminal user ID refers to an IM account used by the local terminal user to log on the IM software, and the opposite terminal user ID refers to an IM account used by the opposite terminal user to log on the IM software. For example, if the IM software is QQ from Tencent Technology (Shenzhen) Company Limited, then the local terminal user ID refers to the QQ account used for logging by the local terminal user, and the opposite terminal user ID refers to the QQ account used for logging by the opposite terminal user.

This embodiment of the invention is described below in an example in which, after the opposite terminal enables its NFC module, the opposite terminal initiates a request carrying the opposite terminal user ID to the server to acquire the opposite terminal certificate issued by the server. After receiving the request initiated by the opposite terminal, the server generates a certificate as the opposite terminal certificate and issues the opposite terminal certificate to the opposite terminal. According to the opposite terminal user ID and the opposite terminal certificate, the server establishes a correspondence relationship between the opposite terminal user ID and the opposite terminal certificate.

In the same way, after the local terminal enables its NFC module, the local terminal sends a request to the server, and the server issues the local terminal certificate to the local terminal and establishes a correspondence relationship between the local terminal user ID and the local terminal certificate according to the local terminal user ID and the local terminal certificate. That is, a correspondence relationship between the terminal user ID and the terminal certificate is established by the server. Since the operation at the local terminal is similar to the operation at the opposite terminal, and thus is not described again here.

At Step 202, the local and opposite terminals identify each other when they are within the preset range, and an NFC connection is established between the two terminals.

An NFC admission range is preset in this embodiment of the invention. When both the local terminal equipped with an NFC module and the opposite terminal equipped with an NFC module are within the preset range, the local terminal and the opposite terminal are paired up through the NFC technologies to establish the NFC connection between the local terminal and the opposite terminal.

In particular, when the local terminal starts the IM software, an NFC process is started at the local terminal, and the local terminal user ID is written into the NFC process at the local terminal. When the opposite terminal starts the IM software, an NFC process is also started at the opposite terminal, and the opposite terminal user ID is written into the NFC process at the opposite terminal.

When the local terminal and the opposite terminal are within the preset range, the NFC module of the local terminal can identify the NFC module of the opposite terminal. After identifying the opposite terminal, the local terminal may send a reminding message to the IM software, and the IM software is aware that the local terminal has identified the NFC module of the opposite terminal after receiving the reminding message. Subsequently, the IM software establishes an NFC connection based on the NFC process, and transmits data, such as the local terminal user ID, the opposite terminal user ID and the opposite terminal certificate, through the NFC connection.

At Step 203, when a touch action is detected by the local terminal, the local terminal initiates an NFC request to the opposite terminal according to the NFC connection, to acquire the opposite terminal user ID and the opposite terminal certificate.

The touch action is generally detected by the local terminal when the local terminal touches to the opposite terminal, that is, the local terminal is intended to establish a session relationship with the opposite terminal. Thus, a session function between terminals is realized conveniently through a short distance inter-terminal touch. Furthermore, a friend relationship may be established between the local terminal user and the opposite terminal user.

In particular, after the NFC module is enabled in Step 201 for the opposite terminal, the opposite terminal acquires the opposite terminal certificate, acquires the opposite terminal user ID after initiating the IM software, and buffers the opposite terminal certificate and the opposite terminal user ID. To obtain the opposite terminal user ID and the opposite terminal certificate, the local terminal sends an NFC request to the opposite terminal through the established NFC connection. Therefore, after the NFC request is received by the opposite terminal, the opposite terminal returns the opposite terminal user ID and the opposite terminal certificate to the local terminal.

At Step 204, the local terminal sends a request message to the server, to request the server to establish the session relationship between the local terminal and the opposite terminal.

The request message sent by the local terminal carries the local terminal user ID, the opposite terminal user ID and the opposite terminal certificate. The opposite terminal certificate, which is issued by the server to the opposite terminal upon the request from the opposite terminal to the server, is sent by the opposite terminal to the local terminal upon the request from the local terminal to the opposite terminal. After receiving the request message, the server determines whether the opposite terminal certificate corresponding to the opposite terminal user ID exists among preset correspondence relationships between the terminal user IDs and the terminal certificates, and if the opposite terminal certificate corresponding to the opposite terminal user ID exists, it is indicated that the opposite terminal has been authenticated by the server. Therefore, a malicious user is prevented from performing a malicious session through such a temporary session mechanism.

At Step 205, the server establishes a friend relationship between the local terminal user and the opposite terminal user according to the local terminal user ID and the opposite terminal user ID.

After the session relationship between the local terminal and the opposite terminal is implemented in the above Step 204, a stable friend relationship is established between the local terminal and the opposite terminal by the server. Even if the local terminal and the opposite terminal do not touch each other later, a normal session can be performed between the local terminal and the opposite terminal with the established stable friend relationship.

At Step 206, after establishing the friend relationship between the local terminal and the opposite terminal, the server issues a notification message to each of the local terminal and the opposite terminal.

The notification message may carry an identifier to inform the terminals whether a friend relationship has been established. The local terminal and the opposite terminal receiving the notification message may be aware of whether the friend relationship has been established according to the identifier carried in the notification message.

If the local terminal and the opposite terminal receiving the notification message issued by the server are aware that a stable friend relationship has been established between the terminals, a normal session can be performed between the local terminal and the opposite terminal due to the already established stable friend relationship, even if the local terminal and the opposite terminal do not touch each other again later.

According to the method in the embodiment of the invention, the local terminal identifies the opposite terminal by the in-built NFC module, and acquires the opposite terminal user ID and the opposite terminal certificate when touching the opposite terminal, so as to send the request message that carries the local terminal user ID, the opposite terminal user ID and the opposite terminal certificate to the server, to enable the server to establish the session relationship between the local terminal and the opposite terminal without an authentication by the local and opposite terminals, thus effectively avoiding the friend relationship establishment between friends adjacent to each other through searching, positioning and validating over the network for the purpose of conducting the session. Furthermore, it is convenient for a terminal user to add a neighboring stranger as a frequently contacted IM friend, and the whole process for establishing a friend relationship is short and convenient, without the complicated process requiring a terminal user validation in the prior art. Therefore, the costs for users to add friends are reduced, while a good experience of communicating and sharing is obtained, to improve user stickiness. Since a convenient friend-adding experience is provided for users, the reputation and value of an Instant Messenger software product is promoted.

### A Third Embodiment

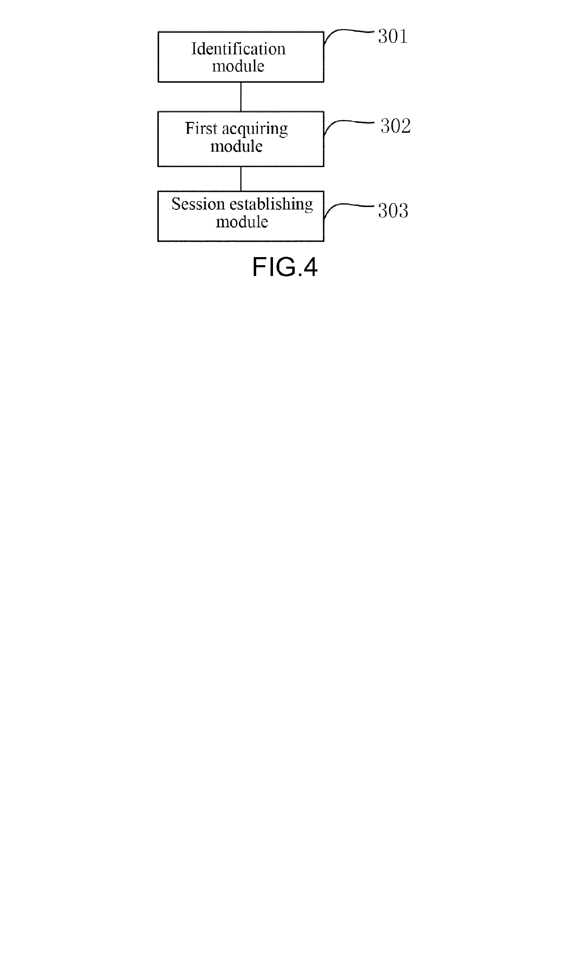

With reference to Figure 4, a device for establishing a session relationship is provided in the third embodiment of the invention, and the device particularly includes:
an identification module 301 for identifying an opposite terminal within a preset range and establishing an NFC connection with the opposite terminal. Both the device and the opposite terminal are equipped with an NFC module and are running an Instant Messenger software;
a first acquiring module 302 for initiating an NFC request to the opposite terminal according to the NFC connection to acquire an opposite terminal user identification (ID) and an opposite terminal certificate, when a touch action is detected; and
a session establishing module 303 for sending to a server a request message that carries a local terminal user ID, the opposite terminal user ID and the opposite terminal certificate, to enable the server to establish the session relationship between the local terminal and the opposite terminal according to the request message.

Furthermore, the device may also include:

a second acquiring module for acquiring the opposite terminal certificate issued by the server when a request is initiated by the opposite terminal to the server.

The device in the embodiment of the invention identifies the opposite terminal by the in-built NFC module, and acquires the opposite terminal user ID and the opposite terminal certificate when touching the opposite terminal, so as to send the request message that carries the local terminal user ID, the opposite terminal user ID and the opposite terminal certificate to the server, to enable the server to establish the session relationship between the local terminal and the opposite terminal without an authentication by the local and opposite terminals, thus effectively avoiding the friend relationship establishment between friends adjacent to each other through searching, positioning and validating over the network for the purpose of conducting the session.

### A Fourth Embodiment

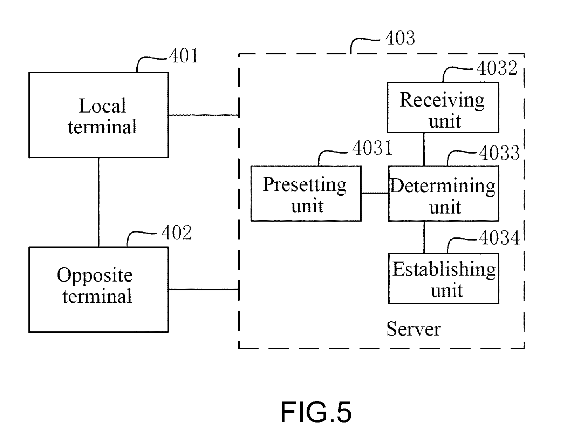

With reference to Figure 5, a system for establishing a session relationship is provided in the fourth embodiment of the invention. The system includes a local terminal 401 equipped with an NFC module and running an Instant Messenger software, an opposite terminal 402 equipped with an NFC module and running an Instant Messenger software, and a server 403.

The local terminal 401 is configured to: identify an opposite terminal within a preset range and establish an NFC connection with the opposite terminal; initiate an NFC request to the opposite terminal according to the NFC connection when detecting a touch action, to acquire an opposite terminal user ID and an opposite terminal certificate; and send to the server a request message that carries a local terminal user ID, the opposite terminal user ID and the opposite terminal certificate.

The opposite terminal 402 sends the opposite terminal user ID and the opposite terminal certificate to the local terminal.

The server 403 receives the request message sent by the local terminal and establishes the session relationship between the local terminal and the opposite terminal according to the request message.

The opposite terminal 402 further sends a request to the server to acquire the opposite terminal certificate issued by the server.

In particular, the server 403 includes:
a presetting unit 4031 for presetting a correspondence relationship between a terminal user ID and a terminal certificate;
a receiving unit 4032 for receiving the request message sent by the local terminal;
a determining unit 4033, which is connected to the presetting unit 4031 and the receiving unit 4032, configure to determine whether the opposite terminal certificate corresponding to the opposite terminal user ID exists among preset correspondence relationships between terminal user IDs and terminal certificates according to the opposite terminal user ID and the opposite terminal certificate carried in the request message; and
an establishing unit 4034, which is connected to the determining unit 4033, configure to establish the session relationship between the local terminal and the opposite terminal according to the local terminal user ID and the opposite terminal user ID, when a determining result of the determining unit 4033 indicates that the opposite terminal certificate corresponding to the opposite terminal user ID exists.

The server further establishes a friend relationship between the local terminal user and the opposite terminal user according to the local terminal user ID and the opposite terminal user ID.

Moreover, the opposite terminal 402 further sends a request to the server and buffers the opposite terminal certificate issued by the server. Accordingly, the server 403 further includes an issuing unit for issuing the opposite terminal certificate to the opposite terminal according to the request initiated by the opposite terminal.

In the system provided in the embodiment of the invention, the local terminal and the opposite terminal identify each other by the respective in-built NFC modules. Once the local terminal touches the opposite terminal, the server acquires the request message that carries the local terminal user ID, the opposite terminal user ID and the opposite terminal certificate, and establishes the session relationship between the local terminal and the opposite terminal, thus effectively avoiding the friend relationship establishment between friends adjacent to each other through searching, positioning and validating over the network for the purpose of conducting the session. Furthermore, it is convenient for a terminal user to add a neighboring stranger as a frequently contacted IM friend, and the whole process for establishing a friend relationship is short and convenient, without the complicated process requiring a terminal user validation in the prior art. Therefore, the costs for users to add friends are reduced, while a good experience of communicating and sharing is obtained, to improve user stickiness. Since a convenient friend-adding experience is provided for users, the reputation and value of an Instant Messenger software product is promoted.

The device and system provided in the embodiments of the invention share the same invention concept as the method embodiment, therefore its detailed implementation is not described in detail herein and a reference may be made to the method embodiment.

It would be appreciated by those skilled in the art that all or some of the steps in the above embodiments can by performed by hardware, or by a software program instructing the related hardware. The program may be stored in a computer readable storage medium, for example a Read Only Memory, a magnetic disc or a Compact Disk, etc.

The preferred embodiments of the invention have been described as above, but are not intended to limit the invention. Any change, substitution, modification and so on that are made with the principle of the invention fall in the scope of the invention.

## Claims

1. A method for establishing a session relationship, comprising steps of:
identifying, by a local terminal, an opposite terminal within a preset range, and establishing a Near Field Communication connection with the opposite terminal, wherein both the local terminal and the opposite terminal are equipped with a Near Field Communication module for establishing the Near Field Communication connection and are running an Instant Messenger software; and
initiating, by the local terminal, a Near Field Communication request to the opposite terminal according to the Near Field Communication connection when the local terminal detects a touch action, acquiring an opposite terminal user ID and an opposite terminal certificate, and sending to a server a request message that carries a local terminal user ID, the opposite terminal user ID and the opposite terminal certificate, to enable the server to establish the session relationship between the local terminal and the opposite terminal according to the request message.

2. The method of claim 1, wherein establishing the session relationship between the local terminal and the opposite terminal according to the request message comprises:
determining, by the server, whether an opposite terminal certificate corresponding to the opposite terminal user ID exists among preset correspondence relationships between terminal user IDs and terminal certificates according to the opposite terminal user ID and the opposite terminal certificate carried in the request message; and
establishing the session relationship between the local terminal and the opposite terminal according to the local terminal user ID and the opposite terminal user ID, if the opposite terminal certificate corresponding to the opposite terminal user ID exists.

3. The method of claim 1, further comprising:
establishing, by the server, a friend relationship between a local terminal user and an opposite terminal user according to the local terminal user ID and the opposite terminal user ID.

4. The method of claim 1, wherein the opposite terminal certificate is issued by the server upon a request initiated by the opposite terminal to the server, and buffered in the opposite terminal.

5. A device for establishing a session relationship, comprising:
an identification module configure to identify an opposite terminal within a preset range and establishing a Near Field Communication connection with the opposite terminal, wherein both the device and the opposite terminal are equipped with a Near Field Communication module for establishing the Near Field Communication connection and are running an Instant Messenger software;
a first acquiring module configure to initiate a Near Field Communication request to the opposite terminal according to the Near Field Communication connection, to acquire an opposite terminal user ID and an opposite terminal certificate, when a touch action is detected; and
a session establishing module configure to send to a server a request message that carries a local terminal user ID, the opposite terminal user ID and the opposite terminal certificate, to enable the server to establish the session relationship between the device and the opposite terminal according to the request message.

6. The device of claim 5, further comprising:
a second acquiring module configure to acquire the opposite terminal certificate issued by the server when a request is initiated by the opposite terminal to the server.

7. A system for establishing a session relationship, comprising a local terminal equipped with a Near Field Communication module and running an Instant Messenger software, an opposite terminal equipped with a Near Field Communication module and running an Instant Messenger software, and a server;
wherein, the local terminal is used to identify an opposite terminal within a preset range and establish a Near Field Communication connection with the opposite terminal; initiate a Near Field Communication request to the opposite terminal according to the Near Field Communication connection when detecting a touch action, to acquire an opposite terminal user ID and an opposite terminal certificate; and send to the server a request message that carries a local terminal user ID, the opposite terminal user ID and the opposite terminal certificate;
the opposite terminal is configured to sends the opposite terminal user ID and the opposite terminal certificate to the device;
the server is configured to receive the request message sent by the device and establish the session relationship between the device and the opposite terminal according to the request message.

8. The system of claim 7, wherein, the server comprises:
a presetting unit for presetting a correspondence relationship between a terminal user ID and a terminal certificate;
a receiving unit for receiving the request message sent by the local terminal;
a determining unit for determining whether the opposite terminal certificate corresponding to the opposite terminal user ID exists among preset correspondence relationships between terminal user IDs and terminal certificates according to the opposite terminal user ID and the opposite terminal certificate carried in the request message; and
an establishing unit for establishing the session relationship between the local terminal and the opposite terminal according to the local terminal user ID and the opposite terminal user ID, when a determining result of the determining unit indicates that the opposite terminal certificate corresponding to the opposite terminal user ID exists.

9. The system of claim 7, wherein, the server is further used to establish a friend relationship between the local terminal and the opposite terminal according to the local terminal user ID and the opposite terminal user ID.

10. The system of claim 7, wherein, the opposite terminal is further used to send a request to the server and buffer the opposite terminal certificate issued by the server;
the server further comprises an issuing unit for issuing the opposite terminal certificate to the opposite terminal according to the request initiated by the opposite terminal.
